# EUROPÄISCHE PATENTSCHRIFT

(11) **EP 1 514 022 B1**
(45) Veröffentlichungstag und Bekanntmachung des Hinweises auf die Patenterteilung: **02.05.2007**
(21) Anmeldenummer: 02794975.9
(22) Anmeldetag: 06.12.2002
(51) Int. Cl.: F02M 69/54, G05D 16/08

(54) **DRUCKREGLER FÜR EINE KRAFTSTOFFVERSORGUNGSANLAGE EINER BRENNKRAFTMASCHINE**
PRESSURE REGULATOR FOR A FUEL SUPPLY SYSTEM OF AN INTERNAL COMBUSTION ENGINE
REGULATEUR DE PRESSION POUR SYSTEME D'ALIMENTATION EN CARBURANT D'UN MOTEUR A COMBUSTION INTERNE

(30) Priorität: 04.06.2002 DE 10224682
(43) Veröffentlichungstag der Anmeldung: 16.03.2005
(73) Patentinhaber: ROBERT BOSCH GMBH, 70442 Stuttgart (DE)
(72) Erfinder: HAARER, Werner, 75428 Illingen (DE); FEES, Hans-Joerg, 74321 Bietigheim-Bissingen (DE); PEETZ, Andreas, 71640 Ludwigsburg (DE); ITTLINGER, Ralph, 71287 Weissach (DE)
(86) Internationale Anmeldenummer: PCT/DE2002/004478
(87) Internationale Veröffentlichungsnummer: WO 2003/102408

(56) Entgegenhaltungen:
- EP-A- 0 694 691
- DE-A- 10 107 223
- US-A- 5 220 941

## Beschreibung

### Stand der Technik

Die Erfindung geht aus von einem Druckregler für eine Kraftstoffversorgungsanlage einer Brennkraftmaschine zum Regeln eines Kraftstoffdrucks, beinhaltend ein Ventil, welches eine durch die Wirkung einer Ventil-Blattfeder gegen einen Ventilsitz in Schließstellung gedrängte Ventilkugel umfaßt, nach dem Oberbegriff von Anspruch 1.

Einen solchen Druckregler beschreibt die nachveröffentlichte DE 101 07 223 A1, wobei die Ventil-Blattfeder gelenkig gelagert ist und ein bezogen auf die gelenkige Lagerung ventilsitzseitiger Arm der Ventil-Blattfeder an der Ventilkugel und ein auf der dem Ventilsitz gegenüberliegenden Seite liegender Arm der Ventil-Blattfeder an einem Stützkörper derart abgestützt ist, daß an der Ventil-Blattfeder Drehmomentgleichgewicht herrscht. Die vom Stützkörper erzeugte Vorspannkraft wird durch die Ventil-Blattfeder auf die Ventilkugel als Schließkraft übertragen. Wenn am Druckeingang Kraftstoffdruck herrscht, der groß genug ist, um eine gegenüber der auf die Ventilkugel wirkende Schließkraft größere Druckkraft zu erzeugen, hebt die Ventilkugel vom Ventilsitz ab und gibt einen bestimmten Durchlaßquerschnitt frei, so daß Kraftstoff zum Druckausgang strömen kann.

Die EP 0 694 691 A1 zeigt eine Vorrichtung zum Fördern von Kraftstoff aus einem Vorratsbehälter zu einer Brennkraftmaschine, mit einem Überströmventil mit einem an einem Stutzen vorgesehenen Sitz, mit dem ein Schließglied in Form einer Kugel zusammenwirkt. Der Sitz ist konisch erweiternd ausgebildet. An einem Träger ist ein Federelement in Form einer Blattfeder an seinem einen Ende eingespannt, dessen anderes freies Ende auf das Schließglied wirkt und dieses gegen den Sitz drückt.

Unter Bezugnahme auf die älteren Anmeldungen DE 101 07 223 A1, FR 2 839 163 A1 und IT MI 2002A 000935 wurden gesonderte Patentansprüche für die Vertragsstaaten DE, FR und IT vorgelegt.

### Vorteile der Erfindung

Ohne die erfindungsgemäße Prallfläche vergrößert sich die von der Ventil-Blattfeder auf die Ventilkugel ausgeübte Kraft mit größer werdendem Durchfluß und mit folglich steigendem Ventilkugelhub stetig. Da sich an der Ventil-Blattfeder ein Kräfte- oder Momentengleichgewicht einstellt, hat dies zur Folge, daß mit steigendem Durchfluß der Kraftstoffdruck in für einen Druckregler unerwünschter Weise ebenfalls ansteigt.

Durch die kennzeichnenden Merkmale von Anspruch 1 ergibt sich demgegenüber eine geringere Steigung der Druck-Durchfluß-Kennlinie des Druckreglers, weshalb auch bei Steigerungen der Durchflußmenge der eingestellte Druck nur wenig größer wird. Wenn die Ventilkugel vom Ventilsitz abgehoben ist, entsteht durch die erfindungsgemäße Lenkung der Kraftstoffströmung auf die Prallfläche eine gegen die Schließkraft der Ventil-Blattfeder auf letztere wirkende Strömungskraft, welche um so größer ist, je größer der Durchfluß durch das Ventil des Druckreglers ist. Somit vergrößert sich mit größerem Durchfluß und damit mit größerem Hub der Ventilkugel einerseits die von der elastischen Ventil-Blattfeder auf die Ventilkugel in Schließrichtung wirkende Kraft, andererseits aber auch die hierzu entgegengerichtete Strömungskraft auf die Ventil-Blattfeder, so daß sich diese Kräfte zumindest teilweise kompensieren. Dadurch wird der Einfluß des Hubes der Ventil-Blattfeder und somit der Einfluß des Durchflusses auf den Druck in vorteilhafter Weise geringer.

Gemäß einer bevorzugten Ausführungsform wird die Prallfläche durch einen benachbart zu einer Kontaktstelle der Kugel mit der Ventil-Blattfeder angeordneten Abschnitt einer unteren Fläche der Ventil-Blattfeder gebildet. Diese Lösung ist besonders vorteilhaft in bezug auf die Fertigungskosten, da wegen der Integration der Prallfläche in die Ventil-Blattfeder keine zusätzlichen Bauelemente notwendig sind.

Um die die Ventilkugel umfließende Kraftstoffströmung auf die Prallfläche an der Ventil-Blattfeder zu lenken, weist der Ventilsitz in bevorzugter Weise einen Kegelwinkel in einem Bereich zwischen 40 Grad und 110 Grad und von vorzugsweise 60 Grad auf.

Gemäß einer weiteren Ausführungsform wird die Prallfläche durch eine an der Kugel festgelegte und sich nach radial außen in den Kraftstoffstrom hinein erstreckende Fläche gebildet. Hierdurch kann die die Ventilkugel umfließende Kraftstoffströmung fast senkrecht auf die Prallfläche treffen, was einen ldealzustand hinsichtlich der hierdurch erzeugten Strömungskraft darstellt.

Gemäß einer besonders zu bevorzugenden Ausführungsform ist die Ventil-Blattfeder mit wenigstens einem Durchbruch versehen, der sich in einer von einer Blattfederlagerstelle weg weisenden Richtung gesehen im Querschnitt vergrößert. Hierdurch stellt sich bei Biegung in der Ventil-Blattfeder über die Länge eine im wesentlichen konstante Spannung ein und die Federkonstante der Ventil-Blattfeder wird relativ klein, weshalb sich Hubänderungen der Ventilkugel in geringerem Maße auf den Druck auswirken. Bei der bevorzugten Ausführungsform, bei welcher sich die Prallfläche an der Ventil-Blattfeder befindet, ist der Durchbruch außerhalb der Prallfläche angeordnet, um den Aufbau der Strömungskraft nicht zu behindern.

Eine Weiterbildung sieht vor, daß die Ventil-Blattfeder rechteckig und der Durchbruch im wesentlichen dreieckförmig ausgebildet ist. Die Ventil-Blattfeder ist vorzugsweise gelenkig kippbar gelagert, wobei der eine Arm der Ventil-Blattfeder gegen eine Vorspannfeder zur Erzeugung einer Kraft gespannt ist, durch welche der andere Arm der Ventil-Blattfeder die Kugel im Ventilsitz niederhält. Dann sind beide Arme der Ventil-Blattfeder mit wenigstens einem dreieckförmigen Durchbruch versehen, da sie beide zur Gesamtbiegesteifigkeit der Ventil-Blattfeder beitragen.

### Zeichnungen

Ausführungsbeispiele der Erfindung sind in der Zeichnung dargestellt und in der nachfolgenden Beschreibung näher erläutert. In den Figuren zeigt :
- Fig.1: eine Querschnittsdarstellung einer bevorzugten Ausführungsform eines Druckreglers gemäß der Erfindung;
- Fig.2: eine Querschnittsdarstellung einer weiteren Ausführungsform eines Druckreglers gemäß der Erfindung;
- Fig.3: eine perspektivische Ansicht einer Ventil-Blattfeder des Druckreglers gemäß Fig.1 oder Fig.2;
- Fig.4: eine Druck-Durchfluß-Kennlinie eines Druckreglers gemäß Fig.1 oder Fig.2.

### Beschreibung der Ausführungsbeispiele

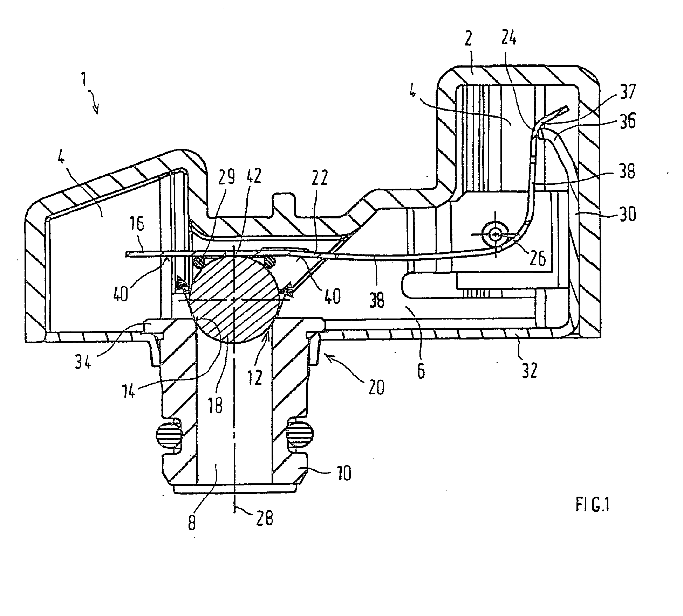

Der in Fig.1 insgesamt mit 1 bezeichnete und dort in einer Schließstellung dargestellte Druckregler ist gemäß einer bevorzugten Ausführungsform an einer aus Maßstabsgründen nicht dargestellten Tankeinbaueinheit oder Filtereinheit befestigt, die in einem Kraftstofftank eines Kraftfahrzeugs angeordnet ist, und dient zur Regelung des Kraftstoffdrucks im Kraftstoffsystem einer selbstzündenden Brennkraftmaschine. Der Druckregler 1 hat ein Gehäuse 2, wobei in zwei nach oben gezogenen Gehäusehälsen je eine seitliche und in Fig.1 deshalb nicht sichtbare Öffnung 4 ausgebildet ist, welche einen Innenraum 6 des Gehäuses 2 mit dem Kraftstofftank verbindet. Bodenseitig ragt in das Gehäuse 2 ein einen Druckeingang 8 bildendes Anschlußstück 10, welches an eine nicht dargestellte Druckleitung des Kraftstoffsystems angeschlossen und von einem Kraftstoffverteiler rückströmenden Kraftstoffs durchflossen ist.

An dem Anschlußstück 10 ist endseitig ein Ventilsitz 12 mit einer Kegelfläche 14 zur Zentrierung einer Ventilkugel 18 angeordnet. Anstatt direkt am Anschlußstück 10 kann der Ventilsitz 12 auch am Gehäuse 2 ausgebildet sein, in diesem Fall sind das Gehäuse 2 und der Ventilsitz 12 beispielsweise als einstückiges, spanabhebend bearbeitetes Gußteil ausgeführt. Der Kegelwinkel der Kegelfläche 14 liegt in einem Bereich zwischen 40 Grad und 110 Grad und beträgt vorzugsweise 60 Grad. Die Kegelfläche 14 hat im wesentlichen eine Länge von 0,5 mm. Gegen den Ventilsitz 12 ist aufgrund der Wirkung einer Ventil-Blattfeder 16 die Ventilkugel 18 gedrängt, wobei die Ventilkugel 18 die Kegelfläche 14 entlang einer Linie berührt. Die Ventil-Blattfeder 16, die Ventilkugel 18 und der Ventilsitz 12 bilden zusammen ein Überströmventil 20 des Druckreglers 1. Die Ventilkugel 18 kann aus Stahl, Keramik oder Kunststoff bestehen, ihr Durchmesser liegt in einem Bereich zwischen 3 mm und 12 mm und beträgt vorzugsweise 7 mm.

Die Ventil-Blattfeder 16 hat vorzugsweise eine winkelige Form, bestehend aus zwei im wesentlichen zueinander rechtwinkelig verlaufenden Armen 22, 24 und ist um eine im Gehäuse 2 gelagerte und vorzugsweise durch einen Stift gebildete Gelenkachse 26 schwenkbar, welche quer zur Längserstreckung der Ventil-Blattfeder 16 und senkrecht zu einer die Mittelachse 28 des Ventilsitzes 12 enthaltenden Ebene ist. Die Gelenkachse 26 verläuft außerdem im Bereich einer gedachten Stoßlinie der beiden Arme 22, 24 der Ventil-Blattfeder 16. Die Gesamtlänge der aufgewickelten Ventil-Blattfeder beträgt beispielsweise 10 bis 40 mm, ihre Breite etwa 5 mm bis 20 mm. Der Abstand der Mittelachse 28 des Ventilsitzes 12 von der Gelenkachse 26 beträgt vorzugsweise 8 mm bis 35 mm.

Zwischen dem ventilsitzseitigen Arm 22 der Ventil-Blattfeder 16, der vorzugsweise senkrecht zur Mittelachse 28 des Ventilsitzes verläuft, und der mit ihrem Scheitel die Ventil-Blattfeder 16 kontaktierenden Ventilkugel 18 ist ein Dämpfungsring 29 angeordnet, welcher beispielsweise einen kreisförmigem Querschnitt hat und aus einem Elastomer besteht. Genauer ragt die Ventilkugel 18 mit einem Kugelsegment ihrer zur Ventil-Blattfeder 16 weisenden Kugelhälfte in eine Ringöffnung des Dämpfungsringes 29 hinein und hält ihn dadurch an der Ventil-Blattfeder 16. Die Durchmesser der Ringöffnung und der Ventilkugel 18 sind dabei vorzugsweise derart gewählt, daß zwischen der Ventil-Blattfeder 16 und dem Dämpfungsring 29 noch ein geringes Bewegungsspiel in Form eines schmalen Spalts vorhanden ist. Im Betrieb bilden sich zwischen dem Dämpfungsring 29, der Ventil-Blattfeder 16 und der Ventilkugel 18 Reibungskräfte aus, welche einerseits ausreichend groß sind, um Schwingungsbewegungen der Ventilkugel 18 zu dämpfen, welche aber andererseits nicht so groß sind, daß die Zentrierung der Ventilkugel 18 im Ventilsitz 12 behindert wird, wenn das Überströmventil 20 schließt.

An dem bezüglich der Gelenkachse 26 auf der dem Ventilsitz 12 gegenüberliegenden Seite liegenden Arm 24 der Ventil-Blattfeder greift eine Vorspannkraft an, welche am ventilsitzseitigen Arm 22 eine die Ventilkugel 18 gegen den Ventilsitz 12 drängende Kraft erzeugt. Diese Vorspannkraft wird vorzugsweise durch eine Spann-Blattfeder 30 gebildet, welche im wesentlichen parallel zu dem auf der dem Ventilsitz 12 gegenüber liegenden Seite liegenden Arm 24 der Ventil-Blattfeder 24 verläuft. Die Spann-Blattfeder 30 ist vorzugsweise mit einem das Gehäuse 2 des Druckreglers 1 bodenseitig verschließenden Deckel 32 einstückig ausgebildet, der im Montagezustand von einer radial äußeren Ringschulter 34 des Anschlußstücks 10 hintergriffen ist, und ragt von diesem senkrecht weg. Das freie Ende 36 der Spann-Blattfeder 30 ist zu dem auf der dem Ventilsitz 12 gegenüber liegenden Seite liegenden Arm 24 der Ventil-Blattfeder 16 hin gebogen und greift in eine an diesem ausgebildete gerundete Ausformung 37 derart ein, daß eine von der Spann-Blatifeder 30 erzeugte Vorspannkraft im wesentlichen senkrecht in den Arm 24 der Ventil-Blattfeder 16 eingeleitet wird. Die Spann-Blattfeder 30 übt mit ihrem gebogenen Ende 36 auf die gelenkig gelagerte Ventil-Blattfeder 16 ein Drehmoment aus, durch welches die Ventilkugel 18 gegen den Ventilsitz 12 gedrängt wird. Die Größe der aufgrund der Vorspannkraft der Spann-Blattfeder 30 auf die Ventilkugel 18 als Reaktion kopfseitig wirkenden Schließkraft ergibt sich aufgrund der gewählten Hebelverhältnisse der beiden Arme 22, 24. An der Ventil-Blattfeder 16 herrscht dann Drehmomentgleichgewicht.

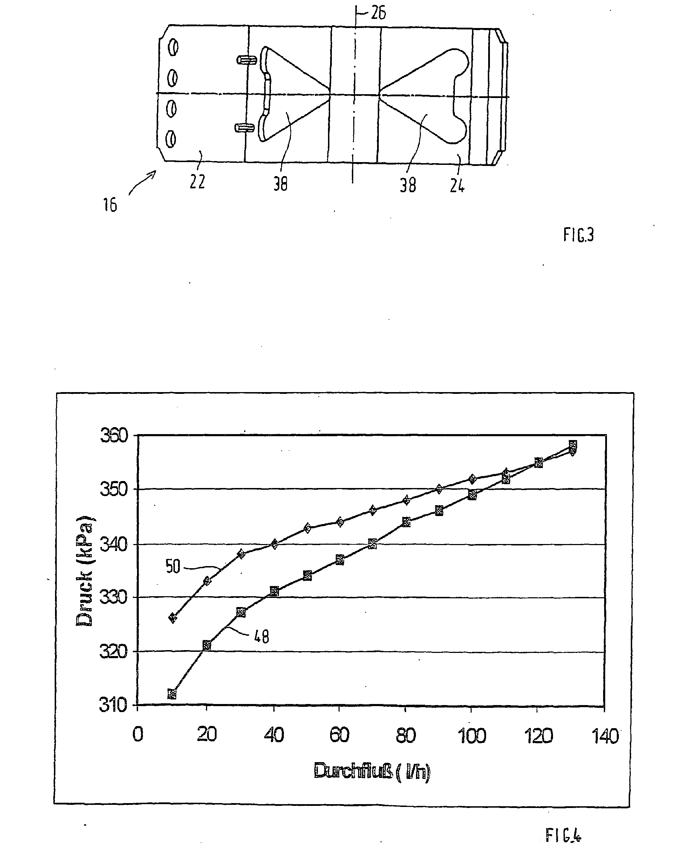

Wie aus Fig.3 hervorgeht, in welcher die Ventil-Blattfeder 16 einzeln dargestellt ist, sind ihre beiden Arme 22, 24 mit jeweils wenigstens einem Durchbruch 38 versehen, der sich in einer von der Gelenkachse 26 weg weisenden Richtung gesehen im Querschnitt vergrößert. Vorzugsweise sind beide Durchbrüche 36 im wesentlichen dreieckförmig ausgebildet und aus der Ventil-Blattfeder 16 ausgestanzt.

Vor diesem Hintergrund ist die Funktionsweise des Druckreglers 1 wie folgt : Wenn am Druckeingang 8 Kraftstoffdruck herrscht, der groß genug ist, um eine gegenüber der auf die Ventilkugel 18 wirkende Schließkraft größere Druckkraft zu erzeugen, hebt die Ventilkugel 18 vom Ventilsitz 12 ab und gibt einen bestimmten Durchlaßquerschnitt frei, so daß Kraftstoff in den Innenraum 6 des Gehäuses 2 und von dort zu den Druckausgängen 4 strömen kann. Aufgrund der elastischen Eigenschaften der Ventil-Blattfeder 16 steigt der Durchlaßquerschnitt mit größer werdendem Kraftstoffvolumen an.

Hierbei umströmt der Kraftstoff die Ventilkugel 18 etwa in der durch die Pfeile P in Fig.1 angedeuteten Weise, wobei die Stromlinien durch die eingangs geschilderte Ausbildung der Kegelfläche 14 des Ventilsitzes 12 auf eine Prallfläche 40 gelenkt werden, welche benachbart zu einer Kontaktstelle 42 der Ventilkugel 18 mit der Ventil-Blattfeder 16 etwa ringförmig um diese herum angeordnet ist und durch einen Teil der unteren Fläche des ventilsitzseitigen Arms 22 der Ventil-Blattfeder 16 gebildet wird. Die Anströmung der Prallfläche 40 durch den Kraftstoff erzeugt eine gegen die Schließkraft der Ventil-Blattfeder 16 wirkende Strömungskraft, welche um so größer ist, je größer der Durchfluß durch das Überströmventil 20 des Druckreglers 1 und deren Wirkung auf die Druckdifferenz zwischen Druckeingang 8 und den Druckausgängen 4 eingangs beschrieben ist. Um den Aufbau der Strömungskraft nicht zu behindern, liegt der Durchbruch 36 des der Ventilkugel 18 zugewandten Armes 22 in einem Bereich zwischen der Prallfläche 40 und der Gelenkachse 26.

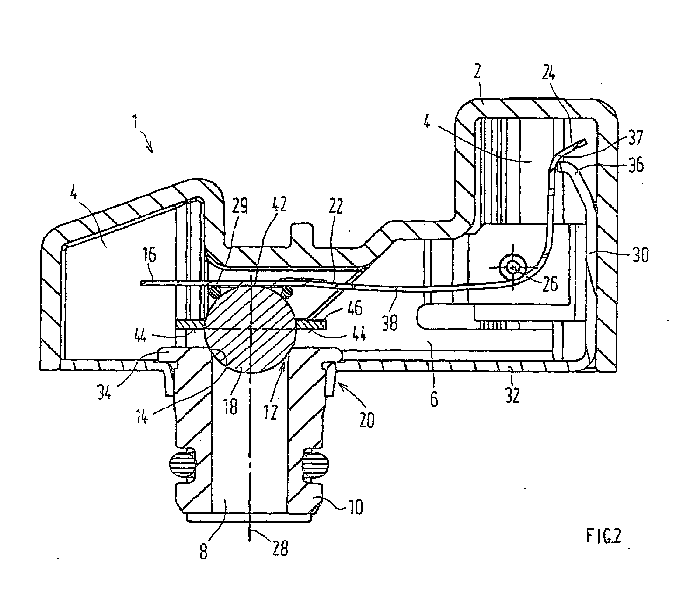

Bei dem weiteren Ausführungsbeispiel der Erfindung nach Fig.2 sind die gegenüber dem vorhergehenden Beispiel gleichbleibenden und gleichwirkenden Teile durch die gleichen Bezugszeichen gekennzeichnet. Im Unterschied zu diesem ist die Prallfläche 44 nicht an der Ventil-Blattfeder 16 selbst sondern an der Ventilkugel 18 ausgebildet. Die Prallfläche 44 für den die Ventilkugel 18 umströmenden Kraftstoff wird hier durch eine an der Ventilkugel 18 festgelegte und sich nach radial außen in den Kraftstoffstrom hinein erstreckende Fläche 44 verkörpert, welche die untere Ringfläche eines die Ventilkugel 18 vorzugsweise entlang ihrer Äquatorlinie umschließenden Rings 46 bildet. Die auf den Ring 46 wirkende Strömungskraft wird dann über die Ventilkugel 18 auf die Ventil-Blattfeder 16 übertragen.

Die Wirkung der Erfindung ist in dem Druck-Durchfluß-Diagramm gemäß Fig.4 dargestellt, wobei der Druckverlauf 48 eines Druckreglers ohne die erfindungsgemäße Prallfläche 40, 44 durch rechteckförmige Stützpunkte und der Druckverlauf 50 des erfindungsgemäßen Druckreglers 1 mit Prallfläche 40, 44 durch rautenförmige Stützpunkte veranschaulicht ist. Wie zu erkennen, ist die Steigung der Kennlinie 50 des Druckreglers 1 mit Prallfläche 40, 44 geringer als die der Kennlinie 48 eines Druckreglers ohne Prallfläche. Weiterhin ist das Druckniveau bei der Kennlinie 50 des Druckreglers 1 mit Prallfläche 40, 44 bei geringen Durchflüssen bereits relativ hoch und liegt somit näher an den entsprechenden Druckwerten bei höheren Durchflüssen als dies bei der Kennlinie 48 des Druckreglers ohne Prallfläche der Fall ist, bei welcher die Steigung bei niedrigen Werten für den Durchfluß relativ groß ist. Folglich sind die Druckänderungen des erfindungsgemäßen Druckreglers 1 insbesondere bei geringen Durchflußmengen wesentlich geringer als bei einem Druckregler ohne Prallfläche.

## Patentansprüche (Patentansprüche für folgende(n) Vertragsstaat(en): DE, FR, IT)

1. Druckregler für eine Kraftstoffversorgungsanlage einer Brennkraftmaschine zum Regeln eines Kraftstoffdrucks, beinhaltend ein Ventil, welches eine durch die Wirkung einer Ventil-Blattfeder gegen einen Ventilsitz in Schließstellung gedrängte Ventilkugel umfasst, **dadurch gekennzeichnet, dass** bei geöffnetem Ventil (20) zumindest ein Teil des die Ventilkugel (18) umströmenden Kraftstoffstroms gegen eine mit der Ventil-Blattfeder (16) gekoppelte Prallfläche (40, 44) zur Erzeugung einer der Schließkraft der Ventil-Blattfeder (16) entgegengerichteten Strömungskraft gelenkt ist und die Ventil-Blattfeder (16) mit wenigstens einem Durchbruch (38) versehen ist, der sich in einer von einer Blattfederlagerstelle (26) weg weisenden Richtung gesehen im Querschnitt vergrößert.

2. Druckregler nach Anspruch 1, **dadurch gekennzeichnet, dass** der Durchbruch (38) außerhalb der Prallfläche (40) angeordnet ist.

3. Druckregler nach Anspruch 1 oder 2, **dadurch gekennzeichnet, dass** die Ventil-Blattfeder (16) rechteckig und der Durchbruch (38) im wesentlichen dreieckförmig ausgebildet ist.

4. Druckregler nach einem der vorhergehenden Ansprüche, **dadurch gekennzeichnet, dass** die Prallfläche durch eine an der Ventilkugel (18) festgelegte und sich nach radial außen in den Kraftstoffstrom hinein erstreckende Fläche (44) gebildet wird.

5. Druckregler nach Anspruch 4, **dadurch gekennzeichnet, dass** die Prallfläche (44) ringförmig umlaufend entlang der Äquatorlinie der Ventilkugel (18) angeordnet ist und senkrecht von dieser wegragt.

6. Druckregler für eine Kraftstoffversorgungsanlage einer Brennkraftmaschine zum Regeln eines Kraftstoffdrucks, beinhaltend ein Ventil, welches eine durch die Wirkung einer Ventil-Blattfeder gegen einen Ventilsitz in Schließstellung gedrängte Ventilkugel umfasst, **dadurch gekennzeichnet, dass** bei geöffnetem Ventil (20) zumindest ein Teil des die Ventilkugel (18) umströmenden Kraftstoffstroms gegen eine mit der Ventil-Blattfeder (16) gekoppelte Prallfläche (40, 44) zur Erzeugung einer der Schließkraft der Ventil-Blattfeder (16) entgegengerichteten Strömungskraft gelenkt ist, wobei die Prallfläche durch eine an der Ventilkugel (18) festgelegte, von der Ventilkugel (18) abstehende und sich nach radial außen in den Kraftstoffstrom hinein erstreckende Fläche (44) gebildet wird.

7. Druckregler nach Anspruch 6, **dadurch gekennzeichnet, dass** die Prallfläche (44) ringförmig umlaufend entlang der Äquatorlinie der Ventilkugel (18) angeordnet ist und senkrecht von dieser wegragt.

8. Druckregler nach Anspruch 6 oder 7, **dadurch gekennzeichnet, dass** die Ventil-Blattfeder (16) mit wenigstens einem Durchbruch (38) versehen ist, der sich in einer von einer Blattfederlagerstelle (26) weg weisenden Richtung gesehen im Querschnitt vergrößert.

9. Druckregler nach Anspruch 8, **dadurch gekennzeichnet, dass** der Durchbruch (38) außerhalb der Prallfläche (40) angeordnet ist.

10. Druckregler nach einem der Ansprüche 8 oder 9, **dadurch gekennzeichnet, dass** die Ventil-Blattfeder (16) rechteckig und der Durchbruch (38) im wesentlichen dreieckförmig ausgebildet ist.

11. Druckregler nach einem der vorhergehenden Ansprüche, **dadurch gekennzeichnet, dass** die Prallfläche durch einen benachbart zu einer Kontaktstelle (42) der Ventilkugel (18) mit der Ventil-Blattfeder (16) angeordneten Abschnitt (40) einer Fläche der Ventil-Blattfeder (16) gebildet wird.

12. Druckregler nach einem der vorhergehenden Ansprüche, **dadurch gekennzeichnet, dass** der Ventilsitz (12) einen Kegelwinkel in einem Bereich zwischen 40 Grad und 110 Grad und von vorzugsweise 60 Grad aufweist.

13. Druckregler nach einem der vorhergehenden Ansprüche, **dadurch gekennzeichnet, dass** die Ventilkugel (18) den Ventilsitz (12) im wesentlichen in Linienberührung kontaktiert.

14. Druckregler nach einem der vorhergehenden Ansprüche, **dadurch gekennzeichnet, dass** die Ventil-Blattfeder (16) an einer Gelenkachse (26) kippbar gelagert ist, wobei der eine Arm (24) der Ventil-Blattfeder (16) gegen eine Vorspannfeder (30) zur Erzeugung einer Kraft gespannt ist, durch welche der andere Arm (22) der Ventil-Blattfeder (16) die Ventilkugel (18) im Ventilsitz (12) niederhält.

15. Druckregler nach Anspruch 14, **dadurch gekennzeichnet, dass** beide Arme (22, 24) der Ventil-Blattfeder (16) mit wenigstens einem dreieckförmigen Durchbruch (38) versehen sind.

## Patentansprüche (Patentansprüche für folgende(n) Vertragsstaat(en): AT, BE, BG, CH, CY, CZ, DK, EE, ES, FI, GB, GR, IE, LI, LU, NK, NL, PT, SE, SI, SK, TR)

1. Druckregler für eine Kraftstoffversorgungsanlage einer Brennkraftmaschine zum Regeln eines Kraftstoffdrucks, beinhaltend ein Ventil, welches eine durch die Wirkung einer Ventil-Blattfeder gegen einen Ventilsitz in Schließstellung gedrängte Ventilkugel umfaßt, **dadurch gekennzeichnet, daß** bei geöffnetem Ventil (20) zumindest ein Teil des die Ventilkugel (18) umströmenden Kraftstoffstroms gegen eine mit der Ventil-Blattfeder (16) gekoppelte Prallfläche (40; 44) zur Erzeugung einer der Schließkraft der Ventil-Blattfeder (16) entgegengerichteten Strömungskraft gelenkt ist.

2. Druckregler nach Anspruch 1, **dadurch gekennzeichnet, daß** die Prallfläche durch einen benachbart zu einer Kontaktstelle (42) der Ventilkugel (18) mit der Ventil-Blattfeder (16) angeordneten Abschnitt (40) einer Fläche der Ventil-Blattfeder (16) gebildet wird.

3. Druckregler nach Anspruch 2, **dadurch gekennzeichnet, daß** der Ventilsitz (12) einen Kegelwinkel in einem Bereich zwischen 40 Grad und 110 Grad und von vorzugsweise 60 Grad aufweist.

4. Druckregler nach Anspruch 1, **dadurch gekennzeichnet, daß** die Prallfläche durch eine an der Ventilkugel (18) festgelegte und sich nach radial außen in den Kraftstoffstrom hinein erstreckende Fläche (44) gebildet wird.

5. Druckregler nach Anspruch 4, **dadurch gekennzeichnet, daß** die Prallfläche (44) ringförmig umlaufend entlang der Äquatorlinie der Ventilkugel (18) angeordnet ist und senkrecht von dieser wegragt.

6. Druckregler nach einem der vorhergehenden Ansprüche, **dadurch gekennzeichnet, daß** die Ventilkugel (18) den Ventilsitz (12) im wesentlichen in Linienberührung kontaktiert.

7. Druckregler nach einem der vorhergehenden Ansprüche, **dadurch gekennzeichnet, daß** die Ventil-Blattfeder (16) mit wenigstens einem Durchbruch (38) versehen ist, der sich in einer von einer Blattfederlagerstelle (26) weg weisenden Richtung gesehen im Querschnitt vergrößert.

8. Druckregler nach Anspruch 7, **dadurch gekennzeichnet, daß** der Durchbruch (38) außerhalb der Prallfläche (40) angeordnet ist.

9. Druckregler nach Anspruch 8, **dadurch gekennzeichnet, daß** die Ventil-Blattfeder (16) rechteckig und der Durchbruch (38) im wesentlichen dreieckförmig ausgebildet ist.

10. Druckregler nach Anspruch 9, **dadurch gekennzeichnet, daß** die Ventil-Blattfeder (16) an einer Gelenkachse (26) kippbar gelagert ist, wobei der eine Arm (24) der Ventil-Blattfeder (16) gegen eine Vorspannfeder (30) zur Erzeugung einer Kraft gespannt ist, durch welche der andere Arm (22) der Ventil-Blattfeder (16) die Ventilkugel (18) im Ventilsitz (12) niederhält.

11. Druckregler nach Anspruch 10, **dadurch gekennzeichnet, daß** beide Arme (22, 24) der Ventil-Blattfeder (16) mit wenigstens einem dreieckförmigen Durchbruch (38) versehen sind.

## Claims (Claims for the following Contracting State(s): DE, FR, IT)

1. Pressure regulator for a fuel supply system of an internal combustion engine for regulating a fuel pressure, containing a valve which comprises a valve ball which is pressed against a valve seat in the closed position under the action of a valve leaf spring, **characterized in that**, when the valve (20) is open, at least part of the fuel flow flowing around the valve ball (18) is deflected towards an impact face (40, 44), which is coupled to the valve leaf spring (16), in order to generate a flow force which counteracts the closing force of the valve leaf spring (16), and the valve leaf spring (16) is provided with at least one aperture (38) which expands in cross section as viewed in a direction facing away from a leaf spring mounting point (26).

2. Pressure regulator according to Claim 1, **characterized in that** the aperture (38) is arranged outside the impact face (40).

3. Pressure regulator according to Claim 1 or 2, **characterized in that** the valve leaf spring (16) is rectangular and the aperture (38) is substantially triangular.

4. Pressure regulator according to one of the preceding claims, **characterized in that** the impact face is formed by a face (44) which is fixed to the valve ball (18) and extends radially outwards into the fuel flow.

5. Pressure regulator according to Claim 4, **characterized in that** the impact face (44) is arranged so as to be annularly encircling along the equatorial line of the valve ball (18) and projects perpendicularly away from the latter.

6. Pressure regulator for a fuel supply system of an internal combustion engine for regulating a fuel pressure, containing a valve which comprises a valve ball which is pressed against a valve seat in the closed position under the action of a valve leaf spring, **characterized in that**, when the valve (20) is open, at least part of the fuel flow flowing around the valve ball (18) is deflected towards an impact face (40, 44), which is coupled to the valve leaf spring (16), in order to generate a flow force which counteracts the closing force of the valve leaf spring (16), the impact face being formed by a face (44) which is fixed to the valve ball (18), protrudes from the valve ball (18) and extends radially outwards into the fuel flow.

7. Pressure regulator according to Claim 6, **characterized in that** the impact face (44) is arranged so as to be annularly encircling along the equatorial line of the valve ball (18) and projects perpendicularly away from the latter.

8. Pressure regulator according to Claim 6 or 7, **characterized in that** the valve leaf spring (16) is provided with at least one aperture (38) which expands in cross section as viewed in a direction facing away from a leaf spring mounting point (26).

9. Pressure regulator according to Claim 8, **characterized in that** the aperture (38) is arranged outside the impact face (40).

10. Pressure regulator according to one of Claims 8 or 9, **characterized in that** the valve leaf spring (16) is rectangular and the aperture (38) is substantially triangular.

11. Pressure regulator according to one of the preceding claims, **characterized in that** the impact face is formed by a section (40), which is arranged adjacent to a contact point (42) of the valve ball (18) against the valve leaf spring (16), of a face of the valve leaf spring (16).

12. Pressure regulator according to one of the preceding claims, **characterized in that** the valve seat (12) has a cone angle in a range between 40 degrees and 110 degrees and of preferably 60 degrees.

13. Pressure regulator according to one of the preceding claims, **characterized in that** the valve ball (18) is in substantially linear contact with the valve seat (12).

14. Pressure regulator according to one of the preceding claims, **characterized in that** the valve leaf spring (16) is mounted on a linkage axle (26) so as to be tiltable, one arm (24) of the valve leaf spring (16) being stressed against a preload spring (30) in order to generate a force, by means of which the other arm (22) of the valve leaf spring (16) holds the valve ball (18) down in the valve seat (12).

15. Pressure regulator according to Claim 14, **characterized in that** both arms (22, 24) of the valve leaf spring (16) are provided with at least one triangular aperture (38).

## Claims (Claims for the following Contracting State(s): AT, BE, BG, CH, CY, CZ, DK, EE, ES, FI, GB, GR, IE, LI, LU, NK, NL, PT, SE, SI, SK, TR)

1. Pressure regulator for a fuel supply system of an internal combustion engine for regulating a fuel pressure, containing a valve which comprises a valve ball which is pressed against a valve seat in the closed position under the action of a valve leaf spring, **characterized in that**, when the valve (20) is open, at least part of the fuel flow flowing around the valve ball (18) is deflected towards an impact face (40; 44), which is coupled to the valve leaf spring (16), in order to generate a flow force which counteracts the closing force of the valve leaf spring (16).

2. Pressure regulator according to Claim 1, **characterized in that** the impact face is formed by a section (40), which is arranged adjacent to a contact point (42) of the valve ball (18) against the valve leaf spring (16), of a face of the valve leaf spring (16).

3. Pressure regulator according to Claim 2, **characterized in that** the valve seat (12) has a cone angle in a range between 40 degrees and 110 degrees and of preferably 60 degrees.

4. Pressure regulator according to Claim 1, **characterized in that** the impact face is formed by a face (44) which is fixed to the valve ball (18) and extends radially outwards into the fuel flow.

5. Pressure regulator according to Claim 4, **characterized in that** the impact face (44) is arranged so as to be annularly encircling along the equatorial line of the valve ball (18) and projects perpendicularly away from the latter.

6. Pressure regulator according to one of the preceding claims, **characterized in that** the valve ball (18) is in substantially linear contact with the valve seat (12).

7. Pressure regulator according to one of the preceding claims, **characterized in that** the valve leaf spring (16) is provided with at least one aperture (38) which expands in cross section as viewed in a direction facing away from a leaf spring mounting point (26).

8. Pressure regulator according to Claim 7, **characterized in that** the aperture (38) is arranged outside the impact face (40).

9. Pressure regulator according to Claim 8, **characterized in that** the valve leaf spring (16) is rectangular and the aperture (38) is substantially triangular.

10. Pressure regulator according to Claim 9, **characterized in that** the valve leaf spring (16) is mounted on a linkage axle (26) so as to be tiltable, one arm (24) of the valve leaf spring (16) being stressed against a preload spring (30) in order to generate a force, by means of which the other arm (22) of the valve leaf spring (16) holds the valve ball (18) down in the valve seat (12).

11. Pressure regulator according to Claim 10, **characterized in that** both arms (22, 24) of the valve leaf spring (16) are provided with at least one triangular aperture (38).

## Revendications (Revendications pour l'(les) Etat(s) contractant(s) suivant(s): DE, FR, IT)

1. Régulateur de pression pour système d'alimentation en carburant d'un moteur à combustion interne, destiné à réguler la pression d'un carburant, comprenant une soupape comportant une bille de soupape forcée contre un siège de soupape en une position de fermeture sous l'effet d'un ressort à lame de soupape,
**caractérisé en ce que**
la soupape (20) étant ouverte, au moins une partie du flux de carburant s'écoulant autour de la bille de soupape (18) est canalisée contre une surface d'impact (40 ; 44) couplée au ressort à lame de soupape (16) pour produire une force d'écoulement opposée à la force de fermeture du ressort à lame de soupape (16) et le ressort à lame de soupape (16) est pourvu d'au moins un passage (38) dont la section transversale augmente, vu dans une direction opposée au point d'appui (26) du ressort à lame.

2. Régulateur de pression selon la revendication 1,
**caractérisé en ce que**
le passage (38) est disposé à l'extérieur de la surface d'impact (40).

3. Régulateur de pression selon la revendication 1 ou 2,
**caractérisé en ce que**
le ressort à lame de soupape (16) est de conception rectangulaire et le passage (38) est essentiellement triangulaire.

4. Régulateur de pression selon l'une des revendications précédentes,
**caractérisé en ce que**
la surface d'impact est formée par une surface (44) solidaire de la bille de soupape (18) et se prolongeant radialement vers l'extérieur dans le flux de carburant.

5. Régulateur de pression selon la revendication 4,
**caractérisé en ce que**
la surface d'impact (44) entoure de manière annulaire la ligne équatoriale de la bille de soupape (18) et fait saillie perpendiculairement à partir de celle-ci.

6. Régulateur de pression pour système d'alimentation en carburant d'un moteur à combustion interne, destiné à réguler la pression d'un carburant, comprenant une soupape comportant une bille de soupape forcée contre un siège de soupape en une position de fermeture sous l'effet d'un ressort à lame de soupape,
**caractérisé en ce que**
la soupape (20) étant ouverte, au moins une partie du flux de carburant s'écoulant autour de la bille de soupape (18) est canalisée contre une surface d'impact (40 ; 44) couplée au ressort à lame de soupape (16) pour produire une force d'écoulement opposée à la force de fermeture du ressort à lame de soupape (16), la surface d'impact étant formée par une surface (44) solidaire de la bille de soupape (18) s'éloignant de celle-ci et se prolongeant radialement vers l'extérieur dans le flux de carburant

7. Régulateur de pression selon la revendication 6,
**caractérisé en ce que**
la surface d'impact (44) entoure de manière annulaire la ligne équatoriale de la bille de soupape (18) et fait saillie perpendiculairement à partir de celle-ci

8. Régulateur de pression selon la revendication 6 ou 7,
**caractérisé en ce que**
le ressort à lame de soupape (16) est muni d'au moins un passage (38) dont la section transversale augmente, vu dans une direction opposée au point d'appui (26) du ressort à lame.

9. Régulateur de pression selon la revendication 8,
**caractérisé en ce que**
le passage (38) est situé en-dehors de la surface d'impact (40).

10. Régulateur de pression selon la revendication 8 ou 9,
**caractérisé en ce que**
le ressort à lame de soupape (16) est rectangulaire et le passage (38) est essentiellement triangulaire.

11. Régulateur de pression selon l'une quelconque des revendications précédentes,
**caractérisé en ce que**
la surface d'impact est formée par une partie (40) d'une surface du ressort à lame de soupape (16) qui est voisine d'un point de contact (42) entre la bille de soupape (18) et le ressort à lame de soupape (16).

12. Régulateur de pression selon l'une des revendications précédentes,
**caractérisé en ce que**
le siège de soupape (12) présente un angle de cône compris dans la plage de 40 à 110 degrés, et de préférence égal à 60 degrés.

13. Régulateur de pression selon l'une quelconque des revendications précédentes,
**caractérisé en ce que**
la bille de soupape (18) est en contact essentiellement linéaire avec le siège de soupape (12).

14. Régulateur de pression selon l'une des revendications précédentes,
**caractérisé en ce que**
le ressort à lame de soupape (16) est monté basculable sur un axe d'articulation (26), un bras (24) du ressort à lame de soupape (16) étant tendu contre un ressort de précontrainte (30) destiné à produire une force grâce à laquelle l'autre bras (22) du ressort à lame de soupape (16) maintient la bille de soupape (18) dans le siège de soupape (12).

15. Régulateur de pression selon la revendication 14,
**caractérisé en ce que**
les deux bras (22, 24) du ressort à lame de soupape (16) sont pourvus d'au moins un passage (38) triangulaire.

## Revendications (Revendications pour l'(les) Etat(s) contractant(s) suivant(s): AT, BE, BG, CH, CY, CZ, DK, EE, ES, FI, GB, GR, IE, LI, LU, MC, NL, PT, SE, SI, SK, TR)

1. Régulateur de pression pour système d'alimentation en carburant d'un moteur à combustion interne, destiné à réguler la pression d'un carburant, comprenant une soupape comportant une bille de soupape forcée contre un siège de soupape en une position de fermeture sous l'effet d'un ressort à lame de soupape,
**caractérisé en ce que**
la soupape (20) étant ouverte, au moins une partie du flux de carburant s'écoulant autour de la bille de soupape (18) est canalisée contre une surface d'impact (40 ; 44) couplée au ressort à lame de soupape (16) pour produire une force d'écoulement opposée à la force de fermeture du ressort à lame de soupape (16).

2. Régulateur de pression selon la revendication 1,
**caractérisé en ce que**
la surface d'impact est formée par une partie (40) d'une surface du ressort à lame de soupape (16) qui est voisine d'un point de contact (42) entre la bille de soupape (18) et le ressort à lame de soupape (16).

3. Régulateur de pression selon la revendication 2,
**caractérisé en ce que**
le siège de soupape (12) présente un angle de cône compris dans la plage de 40 à 110 degrés, et de préférence égal à 60 degrés.

4. Régulateur de pression selon la revendication 1,
**caractérisé en ce que**
la surface d'impact est formée par une surface (44) solidaire de la bille de soupape (18) et se prolongeant radialement vers l'extérieur dans le flux de carburant.

5. Régulateur de pression selon la revendication 4,
**caractérisé en ce que**
la surface d'impact (44) entoure de manière annulaire la ligne équatoriale de la bille de soupape (18) et fait saillie perpendiculairement à partir de celle-ci.

6. Régulateur de pression selon l'une quelconque des revendications précédentes,
**caractérisé en ce que**
la bille de soupape (18) est en contact essentiellement linéaire avec le siège de soupape (12).

7. Régulateur de pression selon l'une quelconque des revendications précédentes,
**caractérisé en ce que**
le ressort à lame de soupape (16) est muni d'au moins un passage (38) dont la section transversale augmente, vu dans une direction opposée au point d'appui (26) du ressort à lame.

8. Régulateur de pression selon la revendication 7,
**caractérisé en ce que**
le passage (38) est situé en-dehors de la surface d'impact (40).

9. Régulateur de pression selon la revendication 8,
**caractérisé en ce que**
le ressort à lame de soupape (16) est de conception rectangulaire et le passage (38) est essentiellement triangulaire.

10. Régulateur de pression selon la revendication 9,
**caractérisé en ce que**
le ressort à lame de soupape (16) est monté basculable sur un axe d'articulation (26), un bras (24) du ressort à lame de soupape (16) étant tendu contre un ressort de précontrainte (30) destiné à produire une force grâce à laquelle l'autre bras (22) du ressort à lame de soupape (16) maintient la bille de soupape (18) dans le siège de soupape (12).

11. Régulateur de pression selon la revendication 10,
**caractérisé en ce que**
les deux bras (22, 24) du ressort à lame de soupape (16) sont pourvus d'au moins un passage (38) triangulaire.
